# EUROPEAN PATENT APPLICATION

(11) **EP 4 283 115 A1**
(43) Date of publication of application: **29.11.2023**
(21) Application number: 22174907.0
(22) Date of filing: 23.05.2022
(51) Int. Cl.: F03D 1/06, B29D 99/00

(54) **AN IMPROVED FLOW ENHANCING FABRIC, SPAR CAP AND WIND TURBINE BLADE**

(71) Applicant: LM Wind Power A/S, 6000 Kolding (DK)
(72) Inventor: Baviloliaie, Mahdi, 6000 Kolding (DK); Scholarth Koefoed, Michael, 6000 Kolding (DK); Zangenberg Hansen, Jens, 6000 Kolding (DK); Razeghi, Rama, Hampshire, S053 4SE (GB); Alkemade, Harry, 1703 DH Heerhugowaard (NL)
(74) Representative: COPA Copenhagen Patents

(57) **Abstract**

A flow-enhancing fabric (1) extending in a longitudinal direction (6) and in a transverse direction (8) is disclosed. The fabric comprises a plurality of fibre layers including a first fibre layer (10) and a second fibre layer (20) arranged stacked on each other so as to form an interface between the first fibre layer (10) and the second fibre layer (20). The first fibre layer (10) comprises a first plurality of fibre bundles oriented in parallel in a first fibre direction (16) and comprising a number of first carbon fibre bundles (13), and the second fibre layer (20) comprises a second plurality of fibre bundles oriented in parallel in a second fibre direction (26) different from the first direction and comprising a number of second carbon fibre bundles (23), so that at least a number of first carbon fibre bundles (13) intersect and contact a number of second carbon fibre bundles (23) at the interface. The fabric further comprises a plurality of monofilaments (30) arranged between the first and second fibre layer (10, 20) and oriented in a third direction, preferably a transverse direction (8), of the fabric, the plurality of monofilaments (30) each having a mutual spacing (31) between them. At least some of the fibres in the fabric are stitched together with one or more threads, such that the fibre bundles, including the first and second carbon fibre bundles (13, 23), and the monofilaments (30) are maintained relative to each other by a stitching pattern, wherein the stitching pattern extends substantially in fourth direction different from the third direction.

## Description

The present disclosure relates to a flow-enhancing fabric. The present disclosure also relates to a spar cap comprising the flow-enhancing fabric as an interlayer, and to a wind turbine blade comprising such a spar cap. Finally, the present disclosure relates to a method of manufacturing a spar cap for a wind turbine blade as well as a method of manufacturing a wind turbine blade shell member.

### BACKGROUND

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 100 metres in length.

Wind turbine blades are usually manufactured by forming two shell parts or shell halves from layers of fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from such blades being subject to increased forces during operation, requiring improved reinforcing structures. The manufacturing of large reinforcing structures, such as spar caps or spar beams, is likewise challenging, in particular when precured, carbon fibre-reinforced spar caps are used as the reinforcing members. Carbon fibres are typically lighter than glass fibres by volume and have improved tensile and compressive strength. However, laminate defects, such as voids, wrinkles or misaligned fibres, may have disadvantageous effects on mechanical properties.

Carbon pultrusions consist of unidirectional carbon fibres embedded in a matrix material. Thus, carbon pultrusions are strong and stiff in the longitudinal direction, but relatively weak and compliant in the transverse direction. Wind turbine blades may be designed with a spar cap comprising carbon pultrusions stacked in layers on top of each other. When stacking pultrusions, interlayer material may be placed in-between the carbon pultrusions. Then the spar cap is resin infused to bond the carbon pultrusions to each other. During and after blade resin infusion, the interlayer material has multiple purposes, such as enhancing resin flow between the carbon pultrusions.

An optimized interlayer between carbon pultrusions should provide: good adhesion between carbon pultrusions, i.e. high fracture toughness, lightning properties, i.e. high electrical conductivity, strength and good permeability. Different candidates for interlayer materials have been suggested in literature. However, none of them fulfil all the requirements for an optimized interlayer, and selection of the interlayer material is a trade-off between different characteristics (adhesion, permeability, structural, lightning). Thus, there is a need for improved interlayers in the wind turbine industry.

### SUMMARY

It is an object of the present disclosure to provide a flow-enhancing fabric, a spar cap, and a wind turbine, which ameliorate some of the disadvantages of the prior art or provide a useful alternative.

According to a first aspect, there is provided a flow-enhancing fabric extending in a longitudinal direction and in a transverse direction, the fabric comprising: a plurality of fibre layers including a first fibre layer and a second fibre layer arranged stacked on each other so as to form an interface between the first fibre layer and the second fibre layer, the first fibre layer comprising a first plurality of fibre bundles oriented in parallel in a first fibre direction and comprising a number of first carbon fibre bundles, and the second fibre layer comprising a second plurality of fibre bundles oriented in parallel in a second fibre direction different from the first direction and comprising a number of second carbon fibre bundles, so that at least a number of first carbon fibre bundles intersect and contact a number of second carbon fibre bundles at the interface, wherein the fabric further comprises a plurality of monofilaments arranged between the first and second fibre layer and oriented in a third direction, preferably a transverse direction, of the fabric, the plurality of monofilaments each having a mutual spacing between them, and wherein at least some of the fibres in the fabric are stitched together with one or more threads, such that the fibre bundles, including the first and second carbon fibre bundles, and the monofilaments are maintained relative to each other by a stitching pattern, wherein the stitching pattern extends substantially in fourth direction different from the third direction. In general, the third direction should be different from the first direction and the second direction.

Similarly, according to a secondary first aspect, there is provided a flow-enhancing fabric extending in a longitudinal direction and in a transverse direction, the fabric comprising: a plurality of fibre layers including a first fibre layer and a second fibre layer arranged stacked on each other so as to form an interface between the first fibre layer and the second fibre layer, the first fibre layer consisting of a first plurality of carbon fibre bundles oriented in parallel in a first fibre direction, and the second fibre layer consisting of a second plurality of carbon fibre bundles oriented in parallel in a second fibre direction different from the first direction, so that at least a number of first carbon fibre bundles intersect and contact a number of second carbon fibre bundles at the interface, wherein the fabric further comprises a plurality of monofilaments arranged between the first and second fibre layer and oriented in a third direction, preferably a transverse direction , of the fabric, the plurality of monofilaments each having a mutual spacing between them. In other words, the fabric may be a biaxial fabric comprising carbon fibres only (full carbon) with monofilaments arranged between the two layers of the biaxial fabric. In this setup, the stitching may be omitted.

The arrangement of carbon fibre bundles in the flow-enhancing fabric is advantageous for several reasons, when the flow-enhancing fabric is used as an interlayer in a spar cap. First, the carbon fibre bundles provide electrical conductivity to the fabric through the thickness of the fabric and thus for electrical conductivity of layers that the fabric is arranged between. Secondly, the physical intersection between the first and second carbon fibre bundles at intersection points also provides a conductive path through the thickness of the fabric. When the flow-enhancing fabric is arranged between two pultruded carbon elements in a spar cap, the carbon fibres of the flow-enhancing fabric provide a conductive path between the two carbon elements sandwiching the flow-enhancing fabric and further provides potential equalisation between the two carbon elements. In this way, the flow-enhancing fabric protects the carbon elements against lightning strikes and flashovers.

The arrangement of monofilaments between the first and second fibre layers, preferably along the transverse direction of the fabric, provides good permeability properties to the fabric. This is because, when the first and second fibre layers are pressed together around the monofilaments, a void on each side of the monofilaments will be present, due to the mutual spacing between the monofilaments, allowing fluid to flow into the void and through the flow-enhancing fabric, in particular in the direction of the monofilaments along the transverse direction. Thus, when the flow-enhancing fabric is arranged between two pultruded carbon elements in a spar cap, and the structure is resin infused, the resin can flow through the void adjacent to the monofilaments, because the monofilaments may substantially retain their cross-sectional shape while the resin is wetting the fibre reinforcement stack. The permeability can be adjusted by tailoring the spacing between the monofilaments and/or by adjusting the diameter of the monofilaments to get a larger void.

As explained above, the third direction is preferably oriented in the transverse direction. The fourth direction is preferably oriented in the longitudinal direction. In use, this means that the stitching is carried out along the length of the object, e.g. the spar cap, whereas the monofilaments are arranged in the transverse direction, e.g. in a chord direction of a spar cap. However, the third direction may also be between -45 and 45 degrees relative to the transverse direction, preferably between -30 and 30 degrees relative to the transverse direction, more preferably between -15 and 15 degrees relative to the transverse direction, and even more preferably between -5 and 5 degrees relative to the transverse direction. Alternatively, or in addition hereto, the third direction may also form an absolute angle with the first direction or the second direction of 20-70 degrees, preferably 30-60 degrees.

In a first advantageous embodiment, the first plurality of fibre bundles and/or the second plurality of fibre layer bundles comprise carbon fibre bundles only. In a second advantageous embodiment, the first plurality of fibre bundles comprises a plurality of first glass fibre bundles and/or the second plurality of fibre layer bundles comprises a plurality of second glass fibre bundles. It is of course possible to combine this first and second advantageous embodiment. In all cases, the first fibre layer and second fibre layer will have carbon fibre bundles that intersect each other.

In some embodiments, an angle between each of the first and second fibre directions relative to the longitudinal direction of the fabric is in the range of 20-70 degrees, preferably 45 degrees. In some embodiments, an angle between the first and second fibre directions are between 70-110 degrees, preferably 90 degrees. By having the glass fibre bundles and the carbon fibre bundles arranged in this way, the transverse failure strength, i.e. tensile transverse strength and stiffness of the spar cap with carbon pultrusions, is improved.

In some embodiments, the glass fibre bundles are glass fibre rovings comprising a plurality of glass fibres. In some embodiments, the carbon fibre bundles are carbon fibre tows, comprising a plurality of carbon fibres.

In some embodiments, the first and/or second fibre layers comprise(s) alternating glass fibre bundles and carbon fibre bundles. In some embodiments, the first and/or second fibre layer comprises a carbon fibre bundle for every Xth glass fibre bundle, wherein X is in the range of 2-50, such as 2-20, preferably between 2-10.

The fabric may comprise a plurality of stitching rows for maintaining arrangement of the plurality of fibres, the plurality of stitching rows includes a first stitching row arranged along a first stitch direction, which is different from the orientation of the monofilaments and preferably oriented in the longitudinal direction. Alternatively, or in addition thereto, at least some of the fibres in the fabric are maintained relative to each other by a binder or tackifyer. In some embodiments, the binder is neoxil.

Even though the present disclosure describes a first and second fibre layer arranged upon, or on top of, each other and comprising a plurality of monofilaments arranged between the two layers, the fabric need not to be manufactured by making the first and second fibre layer first and then arranging them on top of each other with the monofilaments in between. The fabric may also be made by arranging all the fibre bundles as desired, before stitching and optionally binding them together to maintain the desired arrangement.

In some embodiments, the monofilaments are polymeric filaments, preferably thermoplastic monofilaments, such as polyester filaments, polypropylene filaments, polyethylene filaments, PET filaments, glass or other synthetic material. Preferably, the monofilaments and the glass fibres in the glass fibre bundles preferably have substantially the same thermal expansion. In some embodiments, the monofilaments are conductive material such as carbon fibres, copper fibres or steel fibres. This enhances the electrical conductivity further and still provides good permeability transversely. The important feature is that the monofilaments substantially keep its cross-sectional shape while the resin is wetting the material.

While preferred embodiments are described with reference to carbon fibres, these may in alternative embodiments, within the scope of the present disclosure, be replaced by or mixed with other conductive fibres, such as steel fibres.

The first fibre layer has a first upper fibre surface and a first lower fibre surface. In the same way, the second fibre layer has a second lower fibre surface and a second upper fibre surface. In some embodiments, the first fibre layer and a second fibre layer are arranged upon each other such that at least part of the first lower fibre surface is in contact with the second upper fibre surface. Preferably, the only parts of the first lower fibre surface that are not in contact with the second upper fibre surface are the areas surrounding the monofilaments.

The fabric has an upper fabric surface and a lower fabric surface. The upper fabric surface and the lower fabric surface may be defined as the two largest surfaces of the flow-enhancing fabric. The upper fabric surface may be opposite the lower fabric surface. In some embodiments, the first upper fibre surface is the upper fabric surface, and the second lower fibre surface is the lower fabric surface. In other embodiments, the second upper fibre surface is the upper fabric surface, and the first lower fibre surface is the lower fabric surface.

In some embodiments, the area weight of the flow-enhancing fabric is in the range of 50-500 g/m^2, preferably in the range of 100-300 g/m^2,such as 100-250 g/m^2. When the flow-enhancing fabric is used in a spar cap, this area weight is before resin infusion.

In some embodiments, the thickness of the flow-enhancing fabric, when resin infused, is in the range of 0.2 mm-0.5 mm, such as 0.3 mm.

In a preferred embodiment, the average monofilament diameter of the fibre rovings is at most 50 micrometres, preferably at most 25 micrometres, even more preferably at most 20 micrometres.

In another preferred embodiment, the average diameter of the monofilaments is between 100 and 1000 micrometres, preferably between 150 and 500 micrometres, e.g. around 250 micrometres or 350 micrometres.

The mutual spacing between the monofilaments is preferably between 1000 micrometres and 5000 micrometres, preferably between 1500 micrometres and 3500 micrometres, even more preferably between 2000 micrometres and 2500 micrometres.

It is also recognised that the flow-enhancing fabric may comprise a third layer comprising a third plurality of fibre bundles oriented in parallel in a tertiary fibre direction different from at least one of the first direction and second direction and comprising a number of third carbon fibre bundles. In principle, this may be a triaxial fabric. Monofilaments may be provided between both the first and the second layer, and between the second and third layer. However, it may be sufficient to have monofilaments between only two of the layers.

It is also contemplated that the monofilaments need not all be oriented in the same direction. For instance, neighbouring monofilaments may be oriented differently. For instance, a first monofilament may be arranged with a first angle compared to the transverse direction, such as 1 to 30 degrees, and a neighbouring second monofilament may be arranged with a second angle compared to the transverse direction, such as -1 to -30 degrees. It is also possible that the monofilaments are arranged in a zigzag like pattern or even that they are arranged to cross each other. All these embodiments may enhance flow in different directions relative to the flow-enhancing fabric.

In a second aspect, the present disclosure relates to a spar cap for a wind turbine blade comprising a plurality of precured fibre-reinforced elements including a first precured fibre-reinforced element and a second precured fibre-reinforced element, wherein a flow-enhancing fabric according to the first aspect of the present disclosure is arranged between the first precured fibre-reinforced element and the second precured fibre-reinforced element. The plurality of precured fibre-reinforced elements preferably comprise an electrically conductive material, e.g. electrically conductive reinforcement fibres, such as carbon fibres.

In general, the flow enhancing fabric may be used in connection with any wind turbine blade part, such as a trailing edge flange, shear webs, leading edge covers or erosion shields, and the like, and thus not limited only for spar caps.

The precured elements may be pultruded elements. The electrically conductive fibres of the precured elements are preferably carbon fibres. The precured elements may for instance comprises carbon fibres only, or be a hybrid comprising carbon fibres and other fibres, such as glass fibres. The resin of the precured elements, e.g. the pultruded elements, may also be epoxy, vinylester, polyester, polyurethane or Elium^{®}.

In some embodiments, each of the plurality of precured fibre-reinforced elements have a length in the longitudinal direction, a width in the transverse direction, and a height in a thickness direction, wherein the length is longer than the width and the width is longer than the height. The length may be more than 20 meters, such as more than 40 meters, such as more than 70 meters. The width may be between 20-200 mm, such as between 50-150 mm, such as 100 mm. The height may be between 2-10 mm, such as 5 mm.

Each of the plurality of precured fibre-reinforced elements, may have a lower surface and an upper surface extending in the longitudinal direction and the transverse direction. Each of the plurality of elements, such as each of the plurality of precured fibre-reinforced elements, may have a first side surface and a second side surface extending in the longitudinal direction and the thickness direction. Each of the plurality of elements, such as each of the plurality of precured fibre-reinforced elements, may have a first end surface and a second end surface extending in the width direction and the thickness direction. A flow-enhancing fabric may be arranged between the plurality of precured fibre-reinforced elements, to separate all the precured fibre-reinforced elements from each other. The flow-enhancing fabric may be arranged between the precured fibre-reinforced elements in a width direction (horizontal). However, it may also be arranged between the precured fibre-reinforced elements in a thickness direction (vertical).

The first precured fibre-reinforced element has a lower surface and an upper surface extending in the longitudinal direction and the transverse direction, and the second precured fibre-reinforced element has a lower surface and an upper surface extending in the longitudinal direction and the transverse direction.

The first precured fibre-reinforced element and the second precured fibre-reinforced element are arranged such that the lower surface of the first precured fibre-reinforced element is facing the upper surface of the second precured element, the flow-enhancing fabric is being arranged between the lower surface of the first precured fibre-reinforced element and the upper surface of the second precured element.

The first precured fibre-reinforced element and the second precured fibre-reinforced element may be adjacent elements in the thickness direction or the first in the width direction.

In some embodiments, the flow-enhancing fabric is arranged such that the longitudinal direction of the flow-enhancing fabric is substantially parallel with the length of the spar cap and the transverse direction of the flow-enhancing fabric is substantially parallel with the width of the spar cap.

In preferred embodiments, the precured fibre-reinforced elements are pultruded carbon elements.

In a third aspect, the present disclosure relates to a wind turbine blade comprising a spar cap according to the second aspect of the present disclosure. The wind turbine blade may comprise two spar caps according to the spar cap as disclosed herein. For example, the wind turbine blade may comprise a first spar cap in a first blade shell part and a second spar cap in a second blade shell part. The first spar cap may be a pressure side spar cap of a pressure side blade shell part. The second spar cap may be a suction side spar cap of a suction side blade shell part.

Method of manufacturing a spar cap for a wind turbine blade according to the second aspect of the present disclosure, comprising the steps of:
- providing a plurality of precured fibre-reinforced elements and a plurality of flow-enhancing fabrics according to the first aspect of the present disclosure;
- arranging the plurality of precured fibre-reinforced elements to provide a desired spar cap structure, wherein the plurality of flow-enhancing fabrics are arranged between the plurality of precured fibre-reinforced elements to enhance resin flow between the plurality of precured fibre-reinforced elements;
- infusing the spar cap structure with resin; and
- curing the resin to form the spar cap.

In some embodiments, the spar cap is made in a spar cap mould and the method further comprises the steps of:
- providing a spar cap mould, the spar cap mould comprising a moulding surface; and
- arranging the plurality of precured fibre-reinforced elements in the spar cap mould and stacking them to provide a desired spar cap structure, wherein the plurality of flow-enhancing fabrics are arranged between the plurality of precured fibre-reinforced elements to enhance resin flow between the plurality of precured fibre-reinforced elements.

In some embodiments, the spar cap is made directly in a blade shell member mould.

In some embodiments, the step of infusing the spar cap structure with resin is vacuum-assisted resin transfer moulding (VARTM).

In preferred embodiments, the precured fibre-reinforced material is pultruded carbon elements.

Method of manufacturing a wind turbine shell member comprising a spar cap according to the second aspect of the present disclosure, comprising the steps of:
- providing a blade shell member mould comprising a moulding surface and a moulding cavity;
- arranging a number of fibre-reinforced elements, such as fibre layers, within the blade shell member mould;
- arranging a spar cap according to the first aspect of the present disclosure on a spar cap area of the fibre-reinforced elements;
- infusing the blade moulding cavity with resin; and
- curing the resin to form the blade shell member.

In some embodiments, the spar cap is a pre-manufactured spar cap manufactured as described above.

In some embodiments, the spar cap is not pre-manufactured but is laid up directly in the blade mould.

In some embodiments, the step of infusing the blade moulding cavity with resin is vacuum-assisted resin transfer moulding (VARTM).

In preferred embodiments, the precured fibre-reinforced material is pultruded carbon elements.

In some embodiments, the fibre-reinforced elements are layers of glass fibre-reinforced plastic (GRP) or carbon fibre-reinforced plastic (CRP) or a combination thereof. These elements together form the primary part of the blade shell members.

The resin used may be a thermosetting or thermoplastic resin, preferably a thermosetting resin. In an embodiment of the disclosure, the thermosetting resin is selected from an ester-based resin, such as an unsaturated polyester resin, a vinyl ester resin or a urethane (meth)acrylate resin. It may also be an epoxy or Elium^{®} resin. In another embodiment, the resin may be a thermoplastic resin, such as nylon, PVC, ABS, polypropylene or polyethylene. In a preferred embodiment, the resin comprises a polyester, such as an unsaturated polyester. An unsaturated polyester resin may be cured by free radicals which are formed when organic peroxides decompose. The decomposition initiates a reaction by which unsaturated polyester molecules polymerize with styrene forming a three-dimensional structure.

It will be understood that any of the above-described features may be combined in any embodiment of the disclosure. In particular, features and embodiments described with regard to the fabric may also apply to the spar cap, the wind turbine blade and the method of manufacturing the spar cap and wind turbine blade and vice versa.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic diagram illustrating a wind turbine,
Figs. 2A and 2B are schematic diagrams illustrating a wind turbine blade and a spar cap structure arranged within the wind turbine blade,
Figs. 3A, 3B, and 3C are schematic diagrams illustrating a first or second fibre layer according to an embodiment of the present disclosure,
Figs. 4A, 4B, and 4C are schematic diagrams illustrating a flow-enhancing fabric according to an embodiment of the present disclosure,
Fig. 5 is a schematic diagram illustrating a preferred embodiment of a flow-enhancing fabric according to the present disclosure, and
Figs. 6A, 6B, and 6C are schematic diagrams illustrating a cross-sectional view of a flow-enhancing fabric arranged between precured fibre-reinforced elements.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

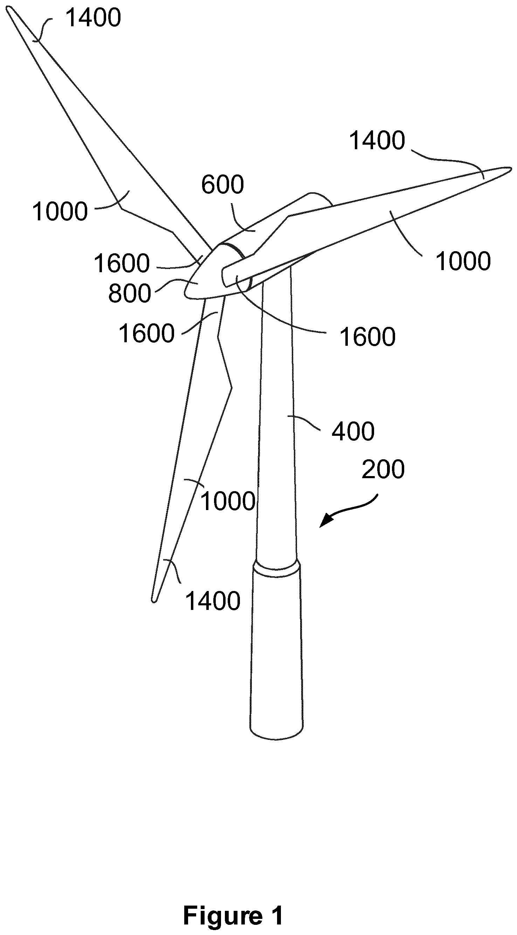

Figure 1 illustrates a conventional modern upwind wind turbine according to the so-called "Danish concept" with a tower 400, a nacelle 600 and a rotor with a substantially horizontal rotor shaft. The rotor includes a hub 800 and three blades 1000 extending radially from the hub 800, each having a blade root 1600 nearest the hub and a blade tip 1400 furthest from the hub 800.

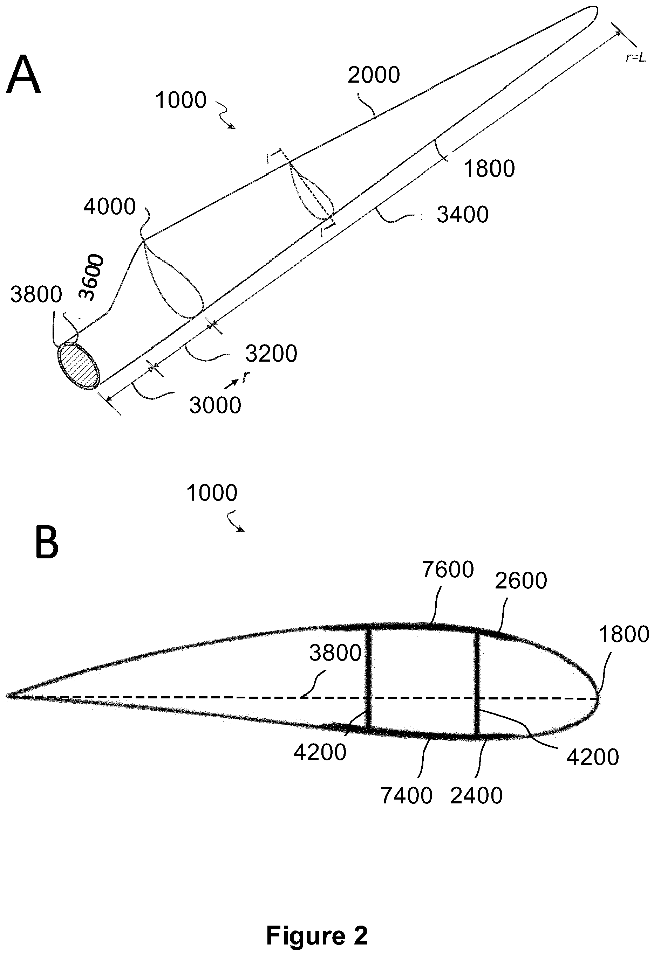

Figure 2A shows a schematic view of a first embodiment of a wind turbine blade 1000. The wind turbine blade 1000 has the shape of a conventional wind turbine blade and comprises a root region 3000 closest to the hub, a profiled or an airfoil region 3400 furthest away from the hub and a transition region 3200 between the root region 3000 and the airfoil region 3400. The blade 1000 comprises a leading edge 1800 facing the direction of rotation of the blade 1000, when the blade is mounted on the hub, and a trailing edge 2000 facing the opposite direction of the leading edge 1800.

The airfoil region 3400 (also called the profiled region) has an ideal or almost ideal blade shape with respect to generating lift, whereas the root region 3000 due to structural considerations has a substantially circular or elliptical cross-section, which for instance makes it easier and safer to mount the blade 1000 to the hub. The diameter (or the chord) of the root region 3000 may be constant along the entire root region 3000. The transition region 3200 has a transitional profile gradually changing from the circular or elliptical shape of the root region 3000 to the airfoil profile of the airfoil region 3400. The chord length of the transition region 3200 typically increases with increasing distance rfrom the hub. The airfoil region 3400 has an airfoil profile with a chord extending between the leading edge 1800 and the trailing edge 2000 of the blade 1000. The width of the chord decreases with increasing distance rfrom the hub.

A shoulder 4000 of the blade 1000 is defined as the position, where the blade 1000 has its largest chord length. The shoulder 4000 is typically provided at the boundary between the transition region 3200 and the airfoil region 3400.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Figure 2B is a schematic diagram illustrating a cross-sectional view of an exemplary wind turbine blade 1000, e.g. a cross-sectional view of the airfoil region of the wind turbine blade 1000. The wind turbine blade 1000 comprises a leading edge 1800, a trailing edge 2000, a pressure side 2400, a suction side 2600, a first spar cap 7400, and a second spar cap 7600. The wind turbine blade 1000 comprises a chord line 3800 between the leading edge 1800 and the trailing edge 2000. The wind turbine blade 1000 comprises shear webs 4200, such as a leading edge shear web and a trailing edge shear web. The shear webs 4200 could alternatively be a spar box with spar sides, such as a trailing edge spar side and a leading edge spar side. The spar caps 7400, 7600 may comprise carbon fibres while the rest of the shell parts 2400, 2600 may comprise glass fibres.

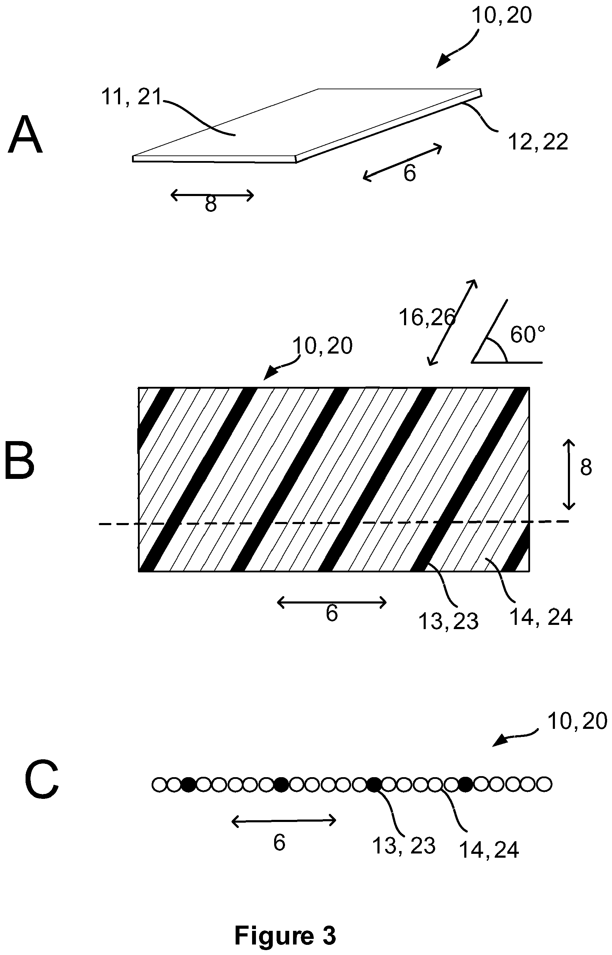

Figure 3 is a schematic diagram illustrating an embodiment of a first or second fibre layer 10, 20 configured to form part of a flow-enhancing fabric 1 according to the present disclosure. Figure 3A illustrates a three-dimensional view, figure 3B illustrates a top view and figure 3C illustrates a cross-sectional view along the dotted line illustrated in figure 3B.

The fibre layer 10, 20 extends in a longitudinal direction 6 and in a transverse direction 8. The fibre layer 10, 20 comprises a plurality of fibre bundles 13, 14, 23, 24 oriented in parallel in a fibre direction 16, 26. The white fibre bundles are glass fibre bundles 14, 24 and the black fibre bundles are carbon fibre bundles 13, 23. In figure 3A and 3B, the fibre layer 10, 20 comprises a carbon fibre bundle 13, 23 for every fifth glass fibre bundle 14, 24. However, the number of glass fibre bundles 14, 24 relative to carbon fibre bundles 13, 23 may be different in other embodiments. It is also contemplated that at least one, and perhaps both, of the fibre layers 10, 20 comprise carbon fibres only. The angle between the fibre direction 16, 26 relative to the longitudinal direction 6 of the fabric is preferably around 45 degrees. However, it may be between 10-80 degrees. In figure 3B the angle is 60 degrees.

Even though not visible in figure 3, the different fibres in the fabric are maintained relative to each other by stitching, optionally with a further binder or tackifier.

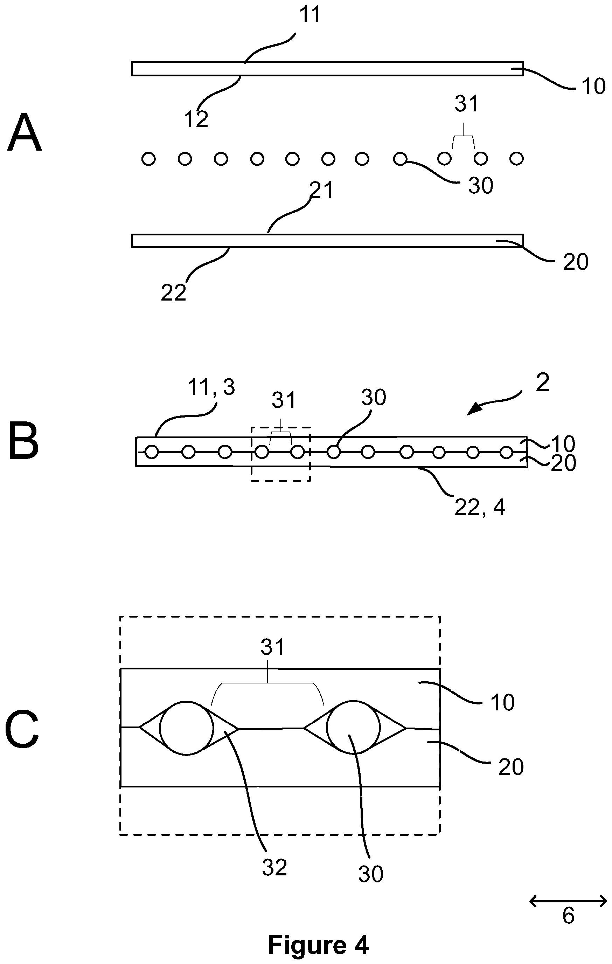

Figure 4A is a schematic illustration of an exploded cross-sectional view along the longitudinal direction 6 of a flow-enhancing fabric 1 according to an embodiment of the present disclosure. The flow-enhancing fabric 1 comprises a first fibre layer 10 and a second fibre layer 20 configured to be arranged upon each other. The first fibre layer 10 has a first upper fibre surface 11 and a first lower fibre surface 12. In the same way, the second fibre layer 20 has a second lower fibre surface 21 and a second upper fibre surface 22. Furthermore, the flow-enhancing fabric 1 comprises a plurality of monofilaments 30 arranged between the first and second fibre layers 10, 20 along the transverse direction 8. The monofilaments 30 are arranged with a mutual spacing 31 between them.

Figure 4B is a schematic illustration of a cross-sectional view along the longitudinal direction of the flow-enhancing fabric in figure 4A. The first fibre layer 10 and the second fibre layer 20 are arranged upon each other such that part of the first lower fibre surface 12 is in contact with part of the second upper fibre surface 21 and such that an upper fabric surface 2 of the flow-enhancing fabric 1 is also the first upper fibre surface 11 of the first fibre layer 10 and a lower fabric surface 4 of the flow-enhancing fabric 1 is the second lower fibre surface 22 of the second fibre layer 20.

The plurality of monofilaments 30 is arranged between the first and second fibre layers 10, 20 with a mutual spacing 31 between them. By arranging the monofilaments along a transverse direction 8 of the flow-enhancing fabric, between the first and second fibre layers 10, 20, a void 32 wherein fluid can flow is formed adjacent to the monofilaments 30, as illustrated in figure 4C (in an exaggerated way), which is a close-up of part of the flow-enhancing fabric 1 of figure 4B.

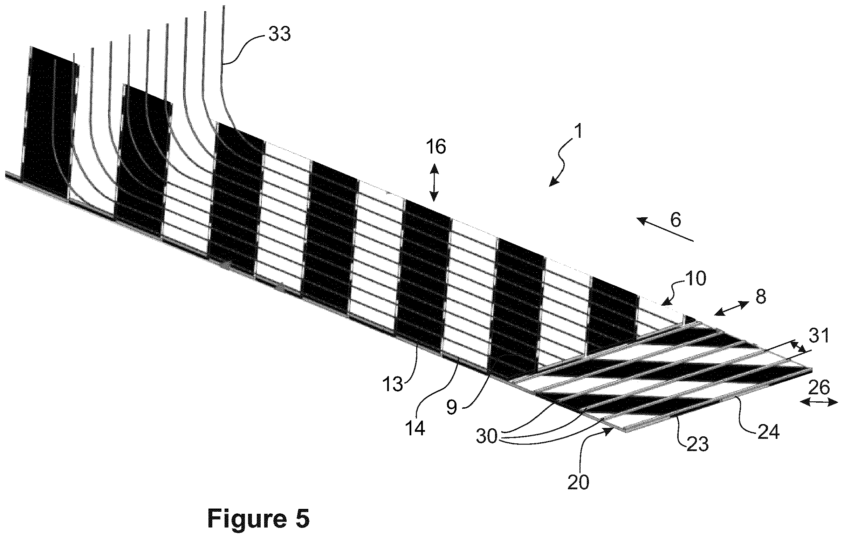

Figure 5 is a schematic illustration of a preferred embodiment of a flow-enhancing fabric 1 according to the present disclosure.

As can be seen in figure 5, the flow-enhancing fabric 1 extends in a longitudinal direction 6 and in a transverse direction 8. The fabric comprises a first fibre layer 10 and a second fibre layer 20 arranged upon each other. The first fibre layer 10 comprises a first plurality of fibre bundles oriented in parallel in a first fibre direction 16 and the second fibre layer 20 comprising a second plurality of fibre bundles oriented in parallel in a second fibre direction 26 different from the first direction. The white fibre bundles in the first fibre layer 10 are first glass fibre bundles 14 and the black fibre bundles are first carbon fibre bundles 13. In the same way, the white fibre bundles in the second fibre layer 20 are second glass fibre bundles 24 and the black fibre bundles are second carbon fibre bundles 23.

In figure 5, the first and second fibre layers 10, 20 each comprise a carbon fibre bundles that are clustered in a width similar to glass fibre bundles clustered in a similar width. However, the mutual widths may be varied. Further, one or both of the layers 10, 20 may comprise carbon fibres only.

In the preferred embodiment in figure 5, the angle between the first fibre direction 16 relative to the longitudinal direction 6 of the fabric is 45 degrees. Similarly, the angle between the second fibre direction 26 relative to the longitudinal direction 6 of the fabric is -45 degrees. Furthermore, the angle between the first and second fibre directions 16, 26 is 90 degrees. In this way, the first carbon fibre bundles 13 intersect and contact the second carbon fibre bundles 23 in a plurality of intersection points 9, allowing electrical conductivity through the flow-enhancing fabric 1 in the thickness direction. The fibre bundles 13, 14, 23, 24 may also be arranged at a different angle, as long as at least a number of first carbon fibre bundles 13 intersect and contact a number of second carbon fibre bundles 23. While the fibres are oriented in -45 degrees and 45 degrees, it is recognised that it is also possible to orient the fibres in other orientations such as 0 degrees and 90 degrees.

The fabric further comprises a plurality of monofilaments 30 arranged between the first and second fibre layers 10, 20 along the transverse direction 8 of the fabric. As can be seen in figure 5, the plurality of monofilaments 30 each have a mutual spacing 31 between them. By having this spacing between the monofilaments 30, a void 32 on each side of the monofilaments 30 will be present, as shown in figure 4C, when the first and second fibre layers 10, 20 are compressed, allowing fluid to flow into the void 32 and through the flow-enhancing fabric 1 along the monofilaments 30 in the transverse direction 8. As shown in the figure, the different fibres in the flow-enhancing fabric 1 are maintained relative to each other by stitching 33. The stitching 33 is provided in a stitching pattern that is oriented in the longitudinal direction 6. However, other directions are also feasible. Various stitching patterns may be used, such as a straight pattern, cross-pattern, zig-zag pattern, or the like.

The flow-enhancing fabric in figure 5 is configured to be used as an interlayer in a spar cap for a wind turbine blade. The flow-enhancing fabric 1 is configured to be arranged such that the longitudinal direction 6 of the flow-enhancing fabric 1 is substantially parallel with a length direction of a spar cap and such that the transverse direction 8 of the flow-enhancing fabric 1 is substantially parallel with a width direction of the spar cap.

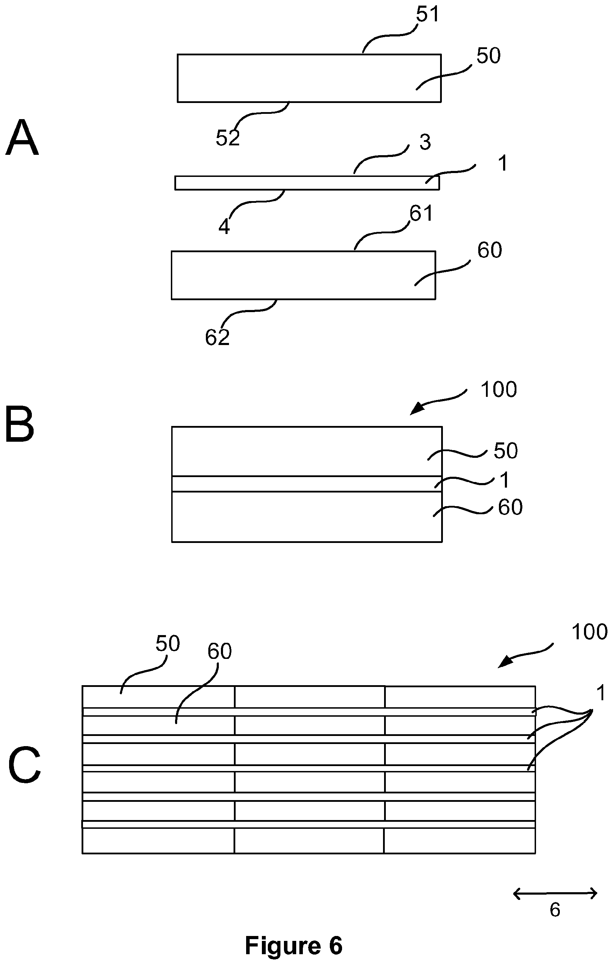

Figure 6A and 6B are schematic illustrations of a cross-sectional view of a flow-enhancing fabric 1, such as that of figure 5, arranged between a first and a second precured fibre-reinforced element 50, 60. Figure 6A is an exploded view, whereas figure 6B is an assembled view.

The first precured fibre-reinforced element 50 and the second precured fibre-reinforced element 60 are arranged such that a lower surface 52 of the first precured fibre-reinforced element 50 is facing a second upper surface 61 of the second precured element 60. A flow-enhancing fabric 1, such as the flow-enhancing fabric of figure 5, is arranged between the lower surface 52 of the first precured fibre-reinforced element 50 and the upper surface 61 of the second precured element 60, e.g. such that the upper fabric surface 2 is in contact with the first lower surface 52 of the first fibre-reinforced element 50 and the lower fabric surface 4 is in contact with the second upper surface 61 of the second fibre-reinforced element 60. The precured fibre-reinforced elements 50, 60 and the flow-enhancing fabric may form part of a spar cap 100 arranged in a wind turbine blade, such as the first and second spar caps 7400, 7600 of the wind turbine blade 1000 as illustrated in figure 2.

Figure 6C is a schematic diagram illustrating a cross-sectional view of a fibre-reinforced composite material 100, e.g. spar cap or part of a spar cap 100, comprising a plurality of precured fibre-reinforced elements, including a first precured fibre-reinforced element 50 and a second precured fibre-reinforced element 60. The plurality of precured fibre-reinforced elements are arranged in an array with three rows of precured fibre-reinforced elements arranged adjacent to each other. Each row of precured fibre-reinforced elements are separated by a flow-enhancing fabric 1 according to the present disclosure. The fibre-reinforced composite material 100 may form part of a spar cap 100 arranged in a wind turbine blade, such as the first and second spar caps 7400, 7600 of the wind turbine blade 1000 as illustrated in figure 2. Although not specifically illustrated, flow-enhancing fabrics 1 may also be provided between adjacent precured fibre-reinforced elements in the width direction.

Exemplary embodiments of the present disclosure are set out in the following items:
1. A flow-enhancing fabric (1) extending in a longitudinal direction (6) and in a transverse direction (8), the fabric comprising:
   a plurality of fibre layers including a first fibre layer (10) and a second fibre layer (20) arranged stacked on each other so as to form an interface between the first fibre layer (10) and the second fibre layer (20),
   the first fibre layer (10) comprising a first plurality of fibre bundles oriented in parallel in a first fibre direction (16) and comprising a number of first carbon fibre bundles (13), and
   the second fibre layer (20) comprising a second plurality of fibre bundles oriented in parallel in a second fibre direction (26) different from the first direction and comprising a number of second carbon fibre bundles (23),
   so that at least a number of first carbon fibre bundles (13) intersect and contact a number of second carbon fibre bundles (23) at the interface,
   wherein the fabric further comprises a plurality of monofilaments (30) arranged between the first and second fibre layer (10, 20) and oriented in a third direction, preferably a transverse direction (8), of the fabric, the plurality of monofilaments (30) each having a mutual spacing (31) between them, and
   wherein at least some of the fibres in the fabric are stitched together with one or more threads, such that the fibre bundles, including the first and second carbon fibre bundles (13, 23), and the monofilaments (30) are maintained relative to each other by a stitching pattern, wherein the stitching pattern extends substantially in fourth direction different from the third direction.
2. The flow-enhancing fabric of item 1, wherein the third direction is oriented in the transverse direction.
3. The flow-enhancing fabric of item 1 or 2, wherein the fourth direction is oriented in the longitudinal direction.
4. The flow-enhancing fabric of any of items 1-3, wherein the first plurality of fibre bundles and/or the second plurality of fibre layer bundles comprise carbon fibre bundles only.
5. The flow-enhancing fabric of any of items 1-3, wherein the first plurality of fibre bundles comprises a plurality of first glass fibre bundles (14) and/or the second plurality of fibre layer bundles comprises a plurality of second glass fibre bundles (24).
6. The flow-enhancing fabric (1) according to any of items 1-5, wherein an angle between each of the first and second fibre directions (16, 26) relative to the longitudinal direction (6) of the fabric is in the range of 20-70 degrees, preferably 45 degrees.
7. The flow-enhancing fabric (1) according to any of items 1-6, wherein an angle between the first and second fibre directions (16, 26) are between 70-110 degrees, preferably 90 degrees.
8. The flow-enhancing fabric (1) according to any of the preceding items, wherein the first and/or second fibre layer (10, 20) comprises alternating glass fibre bundles (14, 24) and carbon fibre bundles (13, 23).
9. The flow-enhancing fabric (1) according to any of the preceding items, wherein the first and/or second fibre layer (10, 20) comprises a carbon fibre bundle (13, 23) for every Xth glass fibre bundle (14, 24), wherein X is in the range of 2-50, such as 2-20, preferably between 2-10.
10. The flow-enhancing fabric (1) according to any of the preceding items, wherein at least some of the fibres in the fabric, including the first and second glass fibre bundles (14, 24) as well as the first and second carbon fibre bundles (13, 23), and the monofilaments (30) are maintained relative to each other by a binder, such as neoxil.
11. The flow-enhancing fabric (1) according to any of the preceding items, wherein the monofilaments (30) are polymeric filaments, preferably thermoplastic monofilaments, such as polyester filaments, polypropylene filaments, polyethylene filaments, PET filaments, glass or other synthetic material or conductive fibres such as carbon fibres, cooper fibre or steel fibres or any combination thereof.
12. The flow-enhancing fabric (1) according to any of the preceding items, wherein the first fibre layer (10) has a first upper fibre surface (11) and a first lower fibre surface (12) and wherein the second fibre layer (20) has a second lower fibre surface (22) and a second upper fibre surface (21) and wherein the first fibre layer (10) and the second fibre layer (20) are arranged upon each other such that at least part of the first lower fibre surface (12) is in contact with the second upper fibre surface (21).
13. The flow-enhancing fabric (1) according to any of the preceding items, wherein the fabric (1) has an upper fabric surface (2) and a lower fabric surface (4) and wherein the first upper fibre surface (11) is the upper fabric surface (2) and the second lower fibre surface (22) is the lower fabric surface (4).
14. The flow-enhancing fabric (1) according to any of the preceding items, wherein the area weight of the flow-enhancing fabric is in the range of 50-500 g/m^2, preferably in the range of 100-300 g/m^2, such as 100-250 g/m^2
15. A spar cap (100, 7400, 7600) for a wind turbine blade (1000) comprising:
   a plurality of electrically conductive precured fibre-reinforced elements including a first precured fibre-reinforced element (50) and
   a second precured fibre-reinforced element (60), wherein
   a flow-enhancing fabric (1) according to any of the preceding items are arranged between the first precured fibre-reinforced element (50) and the second precured fibre-reinforced element (60).
16. The spar cap (100, 7400, 7600) according to item 15, wherein the plurality of electrically conductive precured fibre-reinforced elements is arranged in stacked layers including a first layer comprising a plurality of first precured fibre-reinforced elements (50) and second layer comprising a plurality of second precured fibre-reinforced elements (60) with the flow-enhancing fabric (1) arranged between the first layer and the second layer.
17. A spar cap (100, 7400, 7600) according to any of items 15-16,
   wherein each of the plurality of precured fibre-reinforced elements has a length in the longitudinal direction, a width in the transverse direction, and a height in a thickness direction,
   wherein the length is longer than the width and the width is longer than the height,
   wherein the first precured fibre-reinforced element (50) has a lower surface (52) and an upper surface (51) extending in the longitudinal direction and the width direction and
   the second precured fibre-reinforced element (60) has a lower surface (62) and an upper surface (61) extending in the longitudinal direction and the width direction, and
   wherein the first precured fibre-reinforced element (50) and the second precured fibre-reinforced element (60) are arranged such that the lower surface (52) of the first precured fibre-reinforced element (50) is facing the upper surface (61) of the second precured element (60), and
   wherein the flow-enhancing fabric (1) is being arranged between the lower surface (52) of the first precured fibre-reinforced element (50) and the upper surface (61) of the second precured element (60).
18. A spar cap (100, 7400, 7600) according to any of items 15-17, wherein the flow-enhancing fabric (1) is arranged such that the longitudinal direction (6) of the flow-enhancing fabric (1) is substantially parallel with the length of the spar cap and the transverse direction (8) of the flow-enhancing fabric (1) is substantially parallel with the width of the spar cap.
19. A spar cap (100, 7400, 7600) according to any of items 15-18, wherein the precured fibre-reinforced elements (50, 60) are pultruded carbon elements.
20. A spar cap (100, 7400, 7600) according to any of items 15-19, wherein the spar cap is resin infused.
21. A spar cap (100, 7400, 7600) according to any of items 15-20, wherein the thickness of the flow-enhancing fabric, when resin infused, is in the range of 0.2 mm-0.5 mm, such as 0.3 mm.
22. A wind turbine blade (1000) comprising a spar cap (100, 7400, 7600) according to any of items 15-21.
23. A method of manufacturing a spar cap for a wind turbine blade according to any of items 15-21, comprising the steps of:
   - providing a plurality of precured fibre-reinforced elements and a plurality of flow-enhancing fabrics according to any of items 1-14,
   - arranging the plurality of precured fibre-reinforced elements to provide a desired spar cap structure, wherein the plurality of flow-enhancing fabrics are arranged between the plurality of precured fibre-reinforced elements to enhance resin flow between the plurality of precured fibre-reinforced elements;
   - infusing the spar cap structure with resin; and
   - curing the resin to form the spar cap.
24. The method according to item 23, wherein the spar cap is made in a spar cap mould and the method further comprises the steps of:
   - providing a spar cap mould, the spar cap mould comprising a moulding surface; and
   - arranging the plurality of precured fibre-reinforced elements in the spar cap mould, and stacking them to provide a desired spar cap structure, wherein the plurality of flow-enhancing fabrics are arranged between the plurality of precured fibre-reinforced elements to enhance resin flow between the plurality of precured fibre-reinforced elements.
25. The method according to item 24, wherein the spar cap structure is made directly in a blade shell member mould.
26. The method according to any of items 23-25, wherein the step of infusing the spar cap structure with resin is vacuum-assisted resin transfer moulding (VARTM).
27. A method of manufacturing a wind turbine shell member comprising a spar cap according to any of items 15-21, comprising the steps of:
   - providing a blade shell member mould comprising a moulding surface and a moulding cavity;
   - arranging a number of fibre-reinforced elements, such as fibre layers, within the blade shell member mould;
   - arranging a spar cap according to any of items 15-21 on a spar cap area of the fibre-reinforced elements;
   - infusing the blade moulding cavity with resin; and
   - curing the resin to form the blade shell member.
28. Method according to item 27, wherein the spar cap is a pre-manufactured spar cap manufactured in accordance with any of items 23-26.
29. Method according to item 27, wherein the spar cap is not pre-manufactured but is laid up directly in the blade mould.
30. A flow-enhancing fabric (1) extending in a longitudinal direction (6) and in a transverse direction (8), the fabric comprising:
   a plurality of fibre layers including a first fibre layer (10) and a second fibre layer (20) arranged stacked on each other so as to form an interface between the first fibre layer (10) and the second fibre layer (20),
   the first fibre layer (10) consisting of a first plurality of carbon fibre bundles (13) oriented in parallel in a first fibre direction (16), and
   the second fibre layer (20) consisting of a second plurality of carbon fibre bundles (23) oriented in parallel in a second fibre direction (26) different from the first direction,
   so that at least a number of first carbon fibre bundles (13) intersect and contact a number of second carbon fibre bundles (23) at the interface,
   wherein the fabric further comprises a plurality of monofilaments (30) arranged between the first and second fibre layer (10, 20) and oriented in a third direction, preferably a transverse direction (8), of the fabric, the plurality of monofilaments (30) each having a mutual spacing (31) between them.
31. The flow-enhancing fabric according to item 30 comprising any of the characteristics described in items 2-14.

### REFERENCE SIGNS

- 1: flow-enhancing fabric
- 2: upper fabric surface
- 4: lower fabric surface
- 6: longitudinal direction
- 8: transverse direction
- 9: intersection point
- 10: first fibre layer
- 11: first upper fibre surface
- 12: first lower fibre surface
- 13: first carbon fibre bundle
- 14: first glass fibre bundle
- 16: first fibre direction
- 20: second fibre layer
- 21: second upper fibre surface
- 22: second lower fibre surface
- 23: second carbon fibre bundle
- 24: second glass fibre bundle
- 26: second fibre direction
- 30: monofilament
- 31: spacing between monofilaments
- 32: void
- 33: stitching
- 50: first precured fibre-reinforced element
- 51: first upper surface
- 52: first lower surface
- 60: second precured fibre-reinforced element
- 61: second upper surface
- 62: second lower surface
- 100: spar cap
- 200: wind turbine
- 400: tower
- 600: nacelle
- 800: hub
- 1000: blade
- 1400: blade tip
- 1600: blade root
- 1800: leading edge
- 2000: trailing edge
- 2200: pitch axis
- 2400: pressure side
- 2600: suction side
- 3000: root region
- 3200: transition region
- 3400: airfoil region
- 3800: chord line
- 4000: shoulder / position of maximum chord
- 4200: shear webs
- 7400: first spar cap
- 7600: second spar cap

## Claims

1. A flow-enhancing fabric (1) extending in a longitudinal direction (6) and in a transverse direction (8), the fabric comprising:
a plurality of fibre layers including a first fibre layer (10) and a second fibre layer (20) arranged stacked on each other so as to form an interface between the first fibre layer (10) and the second fibre layer (20),
the first fibre layer (10) comprising a first plurality of fibre bundles oriented in parallel in a first fibre direction (16) and comprising a number of first carbon fibre bundles (13), and
the second fibre layer (20) comprising a second plurality of fibre bundles oriented in parallel in a second fibre direction (26) different from the first direction and comprising a number of second carbon fibre bundles (23),
so that at least a number of first carbon fibre bundles (13) intersect and contact a number of second carbon fibre bundles (23) at the interface,
wherein the fabric further comprises a plurality of monofilaments (30) arranged between the first and second fibre layer (10, 20) and oriented in a third direction, preferably a transverse direction (8), of the fabric, the plurality of monofilaments (30) each having a mutual spacing (31) between them, and
wherein at least some of the fibres in the fabric are stitched together with one or more threads, such that the fibre bundles, including the first and second carbon fibre bundles (13, 23), and the monofilaments (30) are maintained relative to each other by a stitching pattern, wherein the stitching pattern extends substantially in fourth direction different from the third direction.

2. The flow-enhancing fabric of claim 1, wherein the third direction is oriented in the transverse direction, and/or
wherein the fourth direction is oriented in the longitudinal direction.

3. The flow-enhancing fabric of any of claims 1-3, wherein the first plurality of fibre bundles and/or the second plurality of fibre layer bundles comprise carbon fibre bundles only.

4. The flow-enhancing fabric of any of claims 1-3, wherein the first plurality of fibre bundles comprises a plurality of first glass fibre bundles (14) and/or the second plurality of fibre layer bundles comprises a plurality of second glass fibre bundles (24).

5. The flow-enhancing fabric (1) according to any of claims 1-4, wherein an angle between each of the first and second fibre directions (16, 26) relative to the longitudinal direction (6) of the fabric is in the range of 20-70 degrees, preferably 45 degrees, and/or
wherein an angle between the first and second fibre directions (16, 26) are between 70-110 degrees, preferably 90 degrees.

6. The flow-enhancing fabric (1) according to any of the preceding claims, wherein the monofilaments (30) are polymeric filaments, preferably thermoplastic monofilaments, such as polyester filaments, polypropylene filaments, polyethylene filaments, PET filaments, glass or other synthetic material or conductive fibres such as carbon fibres, cooper fibre or steel fibres or any combination thereof.

7. The flow-enhancing fabric (1) according to any of the preceding claims, wherein the area weight of the flow-enhancing fabric is in the range of 50-500 g/m^2, preferably in the range of 100-300 g/m^2, such as 100-250 g/m^2

8. A spar cap (100, 7400, 7600) for a wind turbine blade (1000) comprising:
a plurality of electrically conductive precured fibre-reinforced elements including a first precured fibre-reinforced element (50) and
a second precured fibre-reinforced element (60), wherein
a flow-enhancing fabric (1) according to any of the preceding claims are arranged between the first precured fibre-reinforced element (50) and the second precured fibre-reinforced element (60).

9. The spar cap (100, 7400, 7600) according to claim 8, wherein the plurality of electrically conductive precured fibre-reinforced elements is arranged in stacked layers including a first layer comprising a plurality of first precured fibre-reinforced elements (50) and second layer comprising a plurality of second precured fibre-reinforced elements (60) with the flow-enhancing fabric (1) arranged between the first layer and the second layer.

10. A spar cap (100, 7400, 7600) according to any of claims 8-9, wherein the flow-enhancing fabric (1) is arranged such that the longitudinal direction (6) of the flow-enhancing fabric (1) is substantially parallel with the length of the spar cap and the transverse direction (8) of the flow-enhancing fabric (1) is substantially parallel with the width of the spar cap.

11. A spar cap (100, 7400, 7600) according to any of claims 8-10, wherein the precured fibre-reinforced elements (50, 60) are pultruded carbon elements.

12. A spar cap (100, 7400, 7600) according to any of claims 8-11, wherein the thickness of the flow-enhancing fabric, when resin infused, is in the range of 0.2 mm-0.5 mm, such as 0.3 mm.

13. A method of manufacturing a spar cap for a wind turbine blade according to any of claims 10-12, comprising the steps of:
a. providing a plurality of precured fibre-reinforced elements and a plurality of flow-enhancing fabrics according to any of claims 1-7,
b. arranging the plurality of precured fibre-reinforced elements to provide a desired spar cap structure, wherein the plurality of flow-enhancing fabrics are arranged between the plurality of precured fibre-reinforced elements to enhance resin flow between the plurality of precured fibre-reinforced elements;
c. infusing the spar cap structure with resin; and
d. curing the resin to form the spar cap.

14. A method of manufacturing a wind turbine shell member comprising a spar cap according to any of claims 10-12, comprising the steps of:
- providing a blade shell member mould comprising a moulding surface and a moulding cavity;
- arranging a number of fibre-reinforced elements, such as fibre layers, within the blade shell member mould;
- arranging a spar cap according to any of claims 10-12 on a spar cap area of the fibre-reinforced elements;
- infusing the blade moulding cavity with resin; and
- curing the resin to form the blade shell member.

15. A flow-enhancing fabric (1) extending in a longitudinal direction (6) and in a transverse direction (8), the fabric comprising:
a plurality of fibre layers including a first fibre layer (10) and a second fibre layer (20) arranged stacked on each other so as to form an interface between the first fibre layer (10) and the second fibre layer (20),
the first fibre layer (10) consisting of a first plurality of carbon fibre bundles (13) oriented in parallel in a first fibre direction (16), and
the second fibre layer (20) consisting of a second plurality of carbon fibre bundles (23) oriented in parallel in a second fibre direction (26) different from the first direction,
so that at least a number of first carbon fibre bundles (13) intersect and contact a number of second carbon fibre bundles (23) at the interface,
wherein the fabric further comprises a plurality of monofilaments (30) arranged between the first and second fibre layer (10, 20) and oriented in a third direction, preferably a transverse direction (8), of the fabric, the plurality of monofilaments (30) each having a mutual spacing (31) between them.
